(19) Europäisches Patentamt
European Patent Office
Office européen des brevets

(11) **EP 2 289 085 B1**

(12) **EUROPEAN PATENT SPECIFICATION**

(45) Date of publication and mention
of the grant of the patent:
**07.05.2014 Bulletin 2014/19**

(51) Int Cl.:
***H01H 33/59*** *(2006.01)*

(21) Application number: **08760766.9**

(86) International application number:
**PCT/EP2008/057206**

(22) Date of filing: **10.06.2008**

(87) International publication number:
**WO 2009/149749 (17.12.2009 Gazette 2009/51)**

(54) **A DC CURRENT BREAKER**

GLEICHSTROMUNTERBRECHER

SECTIONNEUR À COURANT CONTINU

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**02.03.2011 Bulletin 2011/09**

(73) Proprietor: **ABB Technology AG
8050 Zürich (CH)**

(72) Inventors:
• **ÅSTRÖM, URBAN
S-772 70 Saxdalen (SE)**
• **LILJESTRAND, Lars
S-722 42 Västerås (SE)**
• **LESCALE, Victor
S-771 43 Ludvika (SE)**
• **BACKMAN, Magnus
S-722 46 Västerås (SE)**

(74) Representative: **Ahrengart, Kenneth
ABB AB
Intellectual Property
Ingenjör Bååths Gata 11, T2 Floor E
721 83 Västerås (SE)**

(56) References cited:
**EP-A- 0 740 320**

• **LEE A ET AL: "The development of a HVDC SF6
breaker" IEEE TRANSACTIONS ON POWER
APPARATUS AND SYSTEMS, IEEE INC. NEW
YORK, US, vol. 10, no. PAS-104, 1 October 1985
(1985-10-01), pages 2721-2730, XP002076110
ISSN: 0018-9510**

**Description**

TECHNICAL FIELD OF THE INVENTION AND BACKGROUND ART

The present invention relates to a device configured to break DC currents exceeding 2500 A flowing in a first current path and transfer said DC currents to an alternative second current path, said device comprising:

- at least one interrupter to be arranged in said first current path and having contacts movable with respect to each other from a closing to an opening position of the interrupter for breaking a current flowing therethrough,
- a resonance circuit connected in parallel with said interrupter and comprising a capacitor and an inductance connected in series and configured to create an oscillating current superimposed on said DC current for creating a zero-crossing of the current flowing through the interrupter, thereby enabling breaking of this current when said contacts are moved apart, and
- a surge arrester connected in parallel with said resonance circuit and configured to start to conduct when the voltage across said interrupter has reached a certain value upon movement of said contacts apart and to conduct until said DC current has been commutated to said alternative second current path connected to said first current path as a consequence of the presence of said voltage across said interrupter in said first current path.

Such a device is known from EP 0740320 A2, where a DC circuit breaker is disclosed with the inductance of the resonance circuit being carefully selected and the capacitance of the capacitor being rendered relatively smaller. For a puffer type gas circuit breaker with a DC interruption current value of 3500A, values for the inductance are given in a range from 175 to 470 $\mu$H and for the capacitance in a range from 18,4 to 49,2 $\mu$F.

Such devices may be used in and be adapted to any conceivable application where it is necessary to be able to break a high DC current flowing in a first current path and to transfer the DC current to an alternative second current path, in which this is mostly, but not exclusively, to be carried out upon occurrence of a failure in a plant, equipment or the like handling or utilizing a DC current exceeding 2500 A. However, it could for instance also be used during scheduled maintenance. For being able to break the current through the interrupter it is essential that a zero-crossing of that current is obtained within a restricted time during which the interrupter may take care of the arc created between its contacts when moving them apart. Thus, it is necessary to design the resonance circuit so that the amplitude of the oscillating current superimposed on the DC current will early enough be high enough for obtaining said zero-crossing.

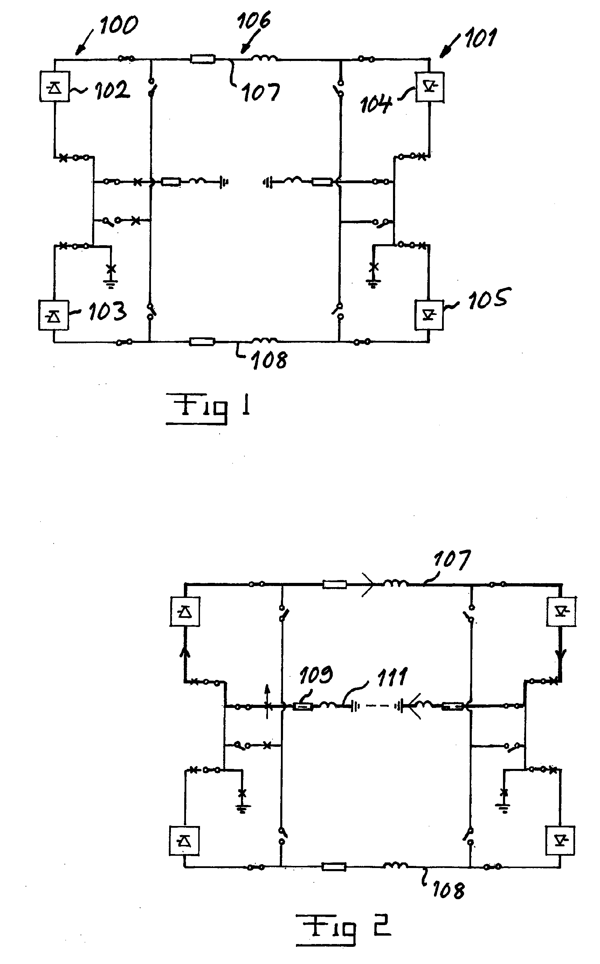

For illuminating but not in any way restricting the invention an application of a device of the type defined in the introduction as a so called metallic return transfer breaker in a plant for transmitting electric power through High Voltage Direct Current (HVDC) will now be briefly explained while referring to Figs 1-3. This plant has two converter stations 100, 101 with converters or converter valves 102-105 for converting direct voltage into alternating voltage and conversely. The stations are interconnected by a direct voltage line 106 having two pole conductors 107, 108. Alternating current (AC) lines connected to each converter station are not shown. During normal operation of the plant a DC current is flowing in one pole conductor 107 from the station 100 to the station 101 and then returns to the station 100 through the pole conductor 108.

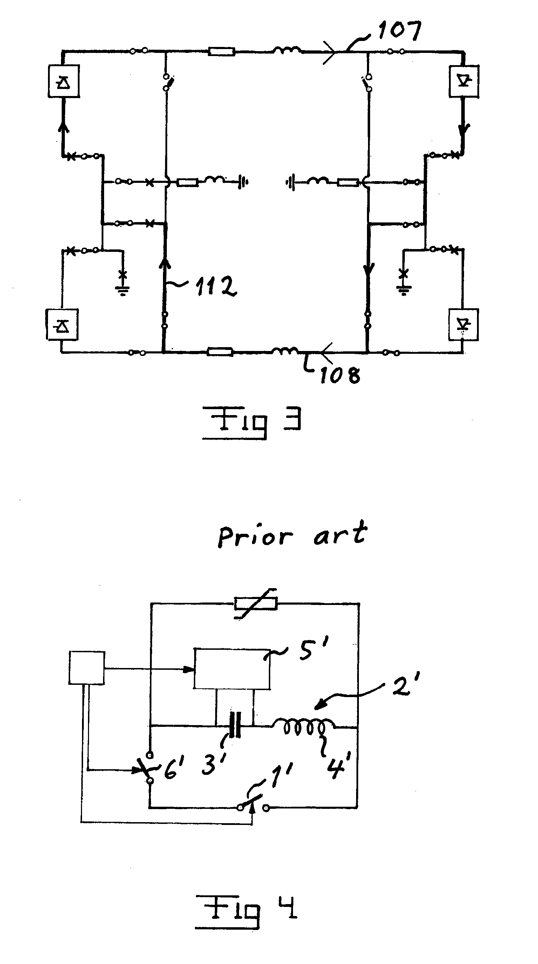

When a failure occurs in one pole of such a plant the converters of that pole will block and stop the pole current. The current will then use the ground as return path, which is illustrated in Fig 2 for the case that the pole with the pole conductor 108 or equipment connected therewith has failed. A device of the type defined in the introduction is arranged in this ground return path 111 as a so-called metallic return transfer breaker 109. The related power of HVDC has increased during the past, so that such a metallic return transfer breaker has for some applications to be designed for DC currents exceeding 2500 A, such as in the order of 4000 A. This metallic return transfer breaker or device configured to break such DC currents is arranged for avoiding having a current in the ground for a longer time and obtain a commutation of the current from the ground path to a metallic return path 112 as illustrated in Fig 3. The very high inductance between the two paths makes the commutation difficult.

In known devices different from the type defined in the introduction by being configured to break DC currents below 2500 A a passive resonance circuit, i.e. a resonance circuit having a capacitor and an inductor and no type of control, has been used. Such a passive resonance circuit is attractive from the cost point of view and by being simple and reliable. However, known such devices with a passive resonance circuit have not been any option for devices configured to break DC currents exceeding 2500 A, since they have not been able to create said oscillating current having an amplitude being high enough for enabling breaking of such high currents. Known devices of the type defined in the introduction have therefore been constructed as shown in Fig 4. Such a device has an interrupter 1' and a resonance circuit 2' connected in parallel therewith. The resonance circuit has a capacitor 3' and an inductance in the form of an inductor 4' connected in series. The resonance circuit is active and has a capacitor charger 5' adapted to precharge the capacitor 3' to for instance 20 kV. The resonance circuit also comprises a so called closing switch 6' connected in series with the capacitor and the inductor and configured to be open when the interrupter is in a closed conducting state and to close after a specific arcing time of the interrupter. Such an active resonance circuit has made it possible to obtain a current zero-crossing necessary for breaking DC-currents exceeding 2500 A, such as in the order of 4000 A flowing through the interrupter.

From A. Lee et al: "The development of a HVDC SF6 breaker", IEEE Trans. on Power Apparatus and Systems, Vol PAS-104, No. 10, October 1985, pp. 2721-2729, a HVDC circuit breaker for switching currents up to 2200 is known which comprises an interrupter and in parallel with the interrupter a series connection of a so called capacitor insertion switch and a parallel connection of capacitor with a surge arrester.

SUMMARY OF THE INVENTION

The object of the present invention is to provide a device configured to break DC currents exceeding 2500 A of the type defined in the introduction being improved in at least some aspect with respect to such devices already known.

This object is according to the invention obtained by providing such a device in which the relationship of the capacitance in $\mu$F to the inductance in $\mu$H of said resonance circuit is $\geq 1$.

This constitutes a totally new approach to design the resonance circuit of a device of this type resulting in major advantages. It is known that there is a maximum resonance frequency of a resonance circuit in a device of this type, above which the interrupter may not cool the arc created upon interrupting fast enough. The resonance frequency is

$$\frac{1}{2\pi}\sqrt{\frac{1}{LC}}$$ . For reducing the costs for the capacitor of the resonance circuit it has until now been focused on selecting a rather high inductance L for remaining below said maximum resonance frequency. This has typically meant said relationship of the capacitance in $\mu$F to the inductance in $\mu$H being in the order of 1/3. However, the present inventors have realized that a substantially increased value of this relationship is very favourable. The amplitude of said oscillating current created by said resonance circuit is in fact proportional to $(C/L)^{1/2}$, so that an increase of this relationship will make it easier to break higher currents. Furthermore, the rate of rise for the transient recovery voltage in the interrupter is proportional to 1/C, so that a larger capacitance will reduce the rate of rise of the recovery voltage for a given DC current. These two properties which are important for breaking high currents are also combined with the reducing effect of an increased capacitance of the resonance circuit upon the resonance frequency thereof.

This means in fact that a device according to the invention may be used to break DC currents being substantially higher than known devices having a passive resonance circuit, so that such a device may be configured to break DC currents exceeding 2500 A.

According to an embodiment of the invention said relationship is $\geq 2$. It has turned out that a relationship exceeding 2 is very favourable for a device of this type making it possible to reliably break current exceeding 2500 A, such as in the order of 5000 A, without any need to use any active resonance circuit of the type described above. The relationship may then according to another embodiment of the invention be $\leq 8$ and particularly between 2 and 8. A relationship above 8 may lead to a capacitor being too costly while leading to a current breaking capacity not asked for.

According to another embodiment of the invention said relationship is between 3 and 5, preferably between 2.5 and 3.5, which has turned out to result in a favourable combination of operation properties and costs of a device of this type.

According to another embodiment of the invention said inductance of the resonance circuit is formed solely by the self inductance of a conductor used to connect said capacitor in parallel with said interrupter. The choice of the relationship of the capacitance to the inductance in the resonance circuit of the device according to the present invention to be high makes it possible to use only the self inductance of said conductor as inductance for the resonance circuit, so that the costs of a separate inductor will be saved. This also makes it possible to obtain a high amplitude of said oscillating current without excessively increasing the capacitance, since this amplitude will increase with a reduced inductance.

According to another embodiment of the invention the inductance of the resonance circuit is between 5 and 35 $\mu$H or between 15 and 25 $\mu$H, which are favourable values for an inductance of said resonance circuit for obtaining said relationship according to the invention. These are also inductances that may be obtained by the self inductance of said conductor. The self inductance of a conductor in resonance circuits of this type is typically about 1 $\mu$H per meter conductor, and such a conductor has typically a length resulting in a self inductance thereof within these ranges.

According to another embodiment of the invention the capacitance of the resonance circuit is between 40 and 80 $\mu$F or between 50 and 70 $\mu$F. It has turned out that a capacitance within these limits will be large enough for obtaining a reduction of the rate of rise of said recovery voltage for a given DC current aimed at and still enable obtaining of said favourable relationship thereof to the inductance of the resonance circuit for enabling breaking of high DC-currents thanks to a high amplitude of said oscillating current superimposed on the DC current. The costs for a capacitor or capacitor bank with such a capacitance will also stay within a limit being well acceptable.

According to another embodiment of the invention said inductance of the resonance circuit is between 15 and 25 $\mu$H and said relationship is between 2.5 and 3.5. This has turned out to result in favourable characteristics of a device according to the invention appearing from the discussion above.

According to another embodiment of the invention said resonance circuit is purely passive. The choice of said relationship of the capacitance to the inductance of the resonance circuit in the device according to the present invention makes it possible to design said resonance circuit to be purely passive and still to be able to obtain a reliable breaking of high DC currents through the interrupter and transfer thereof to said alternative second current path.

According to another embodiment of the invention the device has only one said interrupter connected in parallel with said resonance circuit. "One interrupter" means in this context an interrupter having only one arc chamber in which an arc is created upon interruption. Such a simple interrupter saving costs may be used in most applications for reliably breaking DC currents being as high as about 5000 A.

According to another embodiment of the invention the device has two or more said interrupters connected in series, and the series connection of said interrupters is connected in parallel with said resonance circuit. "Two or more said interrupters connected in series" covers the case of two separate interrupters connected in series, but also the case of an interrupter having a plurality of chambers connected in series, so that a plurality of arcs connected in series may be created upon interruption. This embodiment is more costly than the embodiment having only one interrupter, but it results in a higher total arc voltage, a higher probability to create a voltage step starting the oscillation and an increased withstand capability during the transient recovery phase of the interrupter. This also means that the initiation of the oscillation of the superimposed current may be more efficient, so that a zero-crossing of this current may be obtained by using a lower capacitance than with only one interrupter.

According to another embodiment of the invention said resonance circuit comprises a switch connected in series with said capacitor and said inductance and configured to be open when said interrupter is in a closed conducting state, and the device further comprises means configured to control said switch to close and by that to close said resonance circuit with a delay with respect to said opening of said interrupter. Accordingly, this embodiment has an active resonance circuit, but without a capacitor charger, and it may be used for breaking very high currents, such as in the order of 7000 A. By synchronizing the operation of the closing switch to close with a certain delay with respect to the opening of the interrupter it is possible to create a rather well defined voltage step that efficiently initiates the current oscillation.

The invention also relates to a use of a device according to the present invention for breaking a DC current I, in which $2500 \text{ A} \leq I \leq 7000 \text{ A}$, preferably for $I \geq 4500 \text{ A}$. The advantages of such a use appear clearly from the discussion above of the devices according to different embodiments of the present invention.

The invention also relates to a plant for transmitting electric power through High Voltage Direct Current (HVDC) having in at least one converter station thereof a device according to the present invention for commutating a DC current flowing in said first current path of said plant into an alternative second current path thereof. This constitutes a preferred application of a device according to the present invention. It is then particularly preferred to arrange said device in a plant having a bipole direct current line interconnecting two said converter stations thereof and arranging the device in a ground return path used by said DC current upon failure in connection with one of the two poles of the direct current line and to commutate the DC current to go through a metallic return path between said stations.

Further advantages and advantageous features of the present invention will appear from the following description of embodiments of the invention.

BRIEF DESCRIPTION OF THE DRAWINGS

With reference to the appended drawings, below follows a specific description of embodiments of the invention cited as examples.

In the drawings:

Figs 1-3      are simplified views illustrating a possible application of a device according to the present invention,

Fig 4      is a simplified view of a device according to the prior art,

Figs 5-7      are views similar to the view in Fig 4 of devices according to a first, second and third, respectively, embodiment of the present invention,

Figs 8-11      are simplified views illustrating the operation of a device according to the present invention when breaking a DC current flowing in a first current path and transferring this current to an alternative second current path,

Fig 12      is a diagram of an oscillating current created in a resonance circuit in a device according to the present invention versus time for resonance circuits with a fixed capacitance and different inductances,

Fig 13       is a diagram of an oscillating current created in a resonance circuit in a device according to the present invention versus time for resonance circuits for a fixed resonance frequency but with varying capacitances and inductances, and

Fig 14       is a diagram of the inductance versus the capacitance for a fixed maximum resonance frequency illustrating the area within which capacitances and inductances of the resonance circuit in a device according to the present invention may be selected.

DETAILED DESCRIPTION OF EMBODIMENTS OF THE PRESENT INVENTION

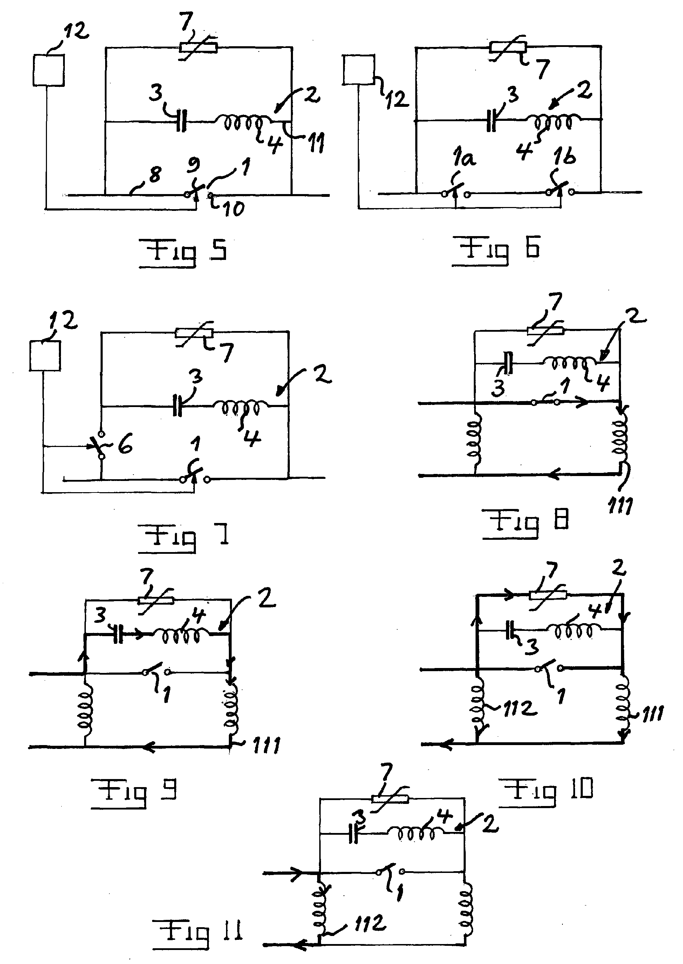

Fig 5 illustrates a device according to a first embodiment of the present invention comprising one single interrupter 1 to be arranged in a first current path 8 and having contacts 9, 10 movable with respect to each other from a closing to an opening position of the interrupter for breaking a current flowing therethrough. The device has also a resonance circuit 2 connected in parallel with the interrupter and comprising a capacitor 3 and an inductance 4 formed solely by the self inductance of a conductor 11 used to connect the capacitor in parallel with the interrupter. The series connection of the capacitor and the inductance is configured to create an oscillating current superimposed on a DC current through the interrupter for breaking at zero-crossing of the current through the interrupter enabling breaking of this current when the contacts 9, 10 are moved apart. The device has also a surge arrester 7 connected in parallel with the resonance circuit and configured to start to conduct when the voltage across the interrupter 1 has reached a certain value upon movement of the contacts 9, 10 apart and to conduct until the DC current has been commutated to an alternative second current path as described further below with reference to Figs 8-11. This commutation takes place as a consequence of the presence of said voltage across the interrupter in said first current path. The surge arrester is configured to start to conduct at a voltage being lower than the rated voltage of the interrupter, such as about 50 kV - 200 kV for an interrupter with a rated voltage of 245 kV.

Examples of a possible interrupter is a 145 kV or 245 kV $SF_6$ gas circuit breaker with puffer technology. The interrupter has preferably a rating exceeding 100 kV, such as in the range of 100 kV - 500 kV.

Accordingly, the device according to the embodiment of the present invention shown in Fig 5 has only a passive resonance circuit enabled by selection of a relationship of the capacitance in $\mu$F to the inductance in $\mu$H thereof as $\geq 1$ still enabling breaking of currents exceeding 2500 A. There is only a control unit 12 for controlling the opening of the interrupter to take place upon occurrence of any event, such as a failure, making this required or just desired.

Fig 6 illustrates a device according to a second embodiment of the invention differing from the embodiment shown in Fig 5 only by the arrangement of two interrupters 1 a, 1b in series. This series connection shall be understood as a series connection of two arcs formed upon separation of two couples of contacts when breaking a current. Thus, it may be a question of two separate interrupters connected in series or an interrupter having two chambers with contacts connected in series. This embodiment results in a higher arc voltage, a higher probability to create a voltage step that initiates the current oscillation and gives an increased withstand capability during the transient recovery phase with respect to the embodiment shown in Fig 5. Series connection of the complete unit can also be possible as well as the series connection shown in Fig 6.

A third embodiment of a device according to the present invention is shown in Fig 7, and this differs from the embodiment shown in Fig 5 by the fact that the resonance circuit comprises a switch 6 connected in series with the capacitor and the inductance and configured to be open when the interrupter is in a closed conducting state. The control means 12 is adapted to control the switch 6 to close and by that to close the resonance circuit with a delay, such as 15 ms after, with respect to a contact separation during an opening of the interrupter. This makes it possible to create a rather well defined voltage step that initiates the current oscillation in the resonance circuit. It is pointed out that the embodiment shown in Fig 7 may of course have more than one interrupter or arcs created upon opening connected in series.

The sequence of breaking a DC current flowing in a first current path through an interrupter in a device according to the present invention and transferring this DC current to an alternative second current path will now be explained with reference made to Figs 8-11 and under the assumption that this device constitutes a metallic return transfer breaker in a plant as shown in Figs 1-3.

It is shown in Fig 8 how the current flows through the interrupter and the inductance 110 of the ground path 111 when the contacts of the interrupter are closed and a failure has occurred, as shown in Fig 2. From the instant the interrupter has started to open an oscillating current is created through the resonance circuit superimposed on the DC current through the interrupter. The amplitude of the injected oscillating current has to be higher than the DC current for obtaining a zero-crossing of the combined current. The injected oscillating current may be calculated while using the expression below if losses are neglected:

$$i_{inject}(t) = U_{arc}\sqrt{\frac{C}{L}}\sin(\omega \cdot t) \qquad\qquad (1)$$

in which

$$\omega = \frac{1}{\sqrt{LC}} \qquad\qquad (2)$$

in which w is the angular resonance frequency, L the inductance of the resonance circuit, C the capacitance of the capacitor and $U_{arc}$ the arc voltage.

Thus, the amplitude of said current will be increased with an increased value of the relationship of C to L.

The injected oscillating current $i_{inject}$ has to be larger than the DC current $I_{dc}$ through the interrupter to achieve a current zero-crossing, i.e.

$$U_{arc}\sqrt{\frac{C}{L}} > I_{dc} \qquad\qquad (3)$$

Thus, it has been realized that a high step in the arc voltage $U_{arc}$ and a combination of "large" capacitance and "small" inductance are key parameters for breaking high DC currents.

Furthermore, the resonance frequency of the oscillating current or the time derivative of the oscillating current has to be low enough in relation to thermal time constants of the arc for a successful current interruption. This means that a maximum resonance frequency will set boundaries when selecting the capacitance and the inductance for the parallel resonance circuit. Previous designs have had a resonance frequency in the range of 4-5 kHz.

A further phenomenon to be considered is the rate of rise of a recovery voltage created when separating the contacts of the interrupter. The rate of rise for the transient recovery voltage has to be considered for preventing breakdown. The equation (4) below gives the rate of rise of the recovery voltage $U_{TRV}$ depending on the DC current $I_{dc}$ and capacitance C of the parallel resonance circuit:

$$\frac{dU_{TRV}}{dt} = \frac{I_{dc}}{C} \qquad\qquad (4)$$

This implies that a "large" capacitance is reducing the recovery voltage rate of rise for a given DC current.

The DC current will in the state shown in Fig 9 charge the capacitor and the voltage across the capacitor and the interrupter will increase. The current through the inductance of the new path is slowly increasing when the voltage across the interrupter is increasing. The voltage across the interrupter increases until the protective voltage level of the surge arrester 7 is reached. The voltage across the interrupter is then kept constant and equal to the surge arrester voltage until the DC current is commutated to the metallic return path 112 as shown in Fig 11 as a consequence of the presence of the voltage across the surge arrester and by that across the interrupter in said first current path. The time from interruption at a current zero crossing until the surge arrester starts to conduct may typically be in the order of 1 ms and the time during which the surge arrester conducts may typically be in the order of 100 ms. Computer simulations have been carried out for investigating the influence of capacitance and inductance of a resonance circuit in a device according to the embodiment of the present invention shown in Fig 5.

Three computer simulations have firstly been carried out with different inductances but the same capacitance for a DC current of 3 kA. The values of capacitance and inductance were as follows:

C = 20 μF
L1 = 15 μH

L2 = 60 $\mu$H
L3 = 120 $\mu$H.

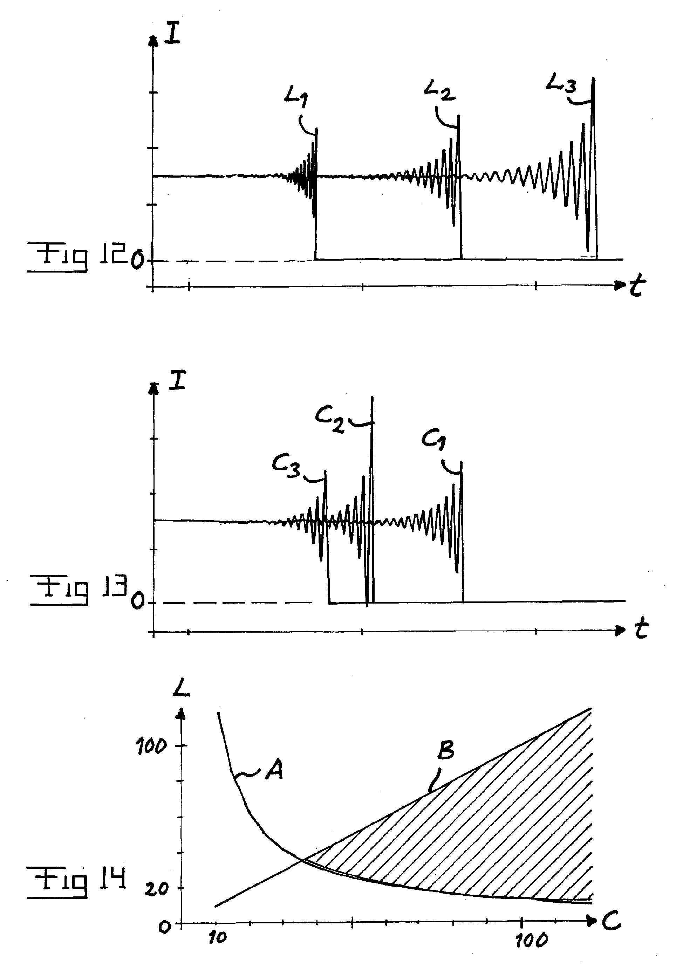

The diagram in Fig 12 illustrates the current I versus time through the interrupter for these three cases. It appears that increasing the inductance reduces the resonance frequency, but the time until a zero-crossing occurs will increase.

Corresponding simulations for a constant inductance and different capacitances show that the highest capacitance gives the fastest current interruption and lowest resonance frequency, since a large capacitance makes it possible to improve two important properties, namely a lower resonance frequency and a high amplitude of an oscillating current.

Three simulations have been performed with different capacitances and inductances but the same resonance frequency for a DC current of 3 kA according to the values below:

C1 = 20 $\mu$F and L1 = 60 $\mu$H
C2 = 40 $\mu$F and L2 = 30 $\mu$H
C3 = 60 $\mu$F and L3 = 20 $\mu$H

Accordingly, the resonance frequency is kept constant.

Fig 13 shows a diagram of the DC current with superimposed oscillating current versus time for these three cases. It is shown how the fastest current interruption is achieved for the case with the highest capacitance.

Thus, it may be concluded that it is positive to have a high relationship of the capacitance to the inductance of the resonance circuit for obtaining a high amplitude of the oscillating current and a high capacitance for restricting the rate of rise of recovery voltage for preventing breakdown after interruption.

Fig 14 illustrates how the inductance and the capacitance of a resonance circuit in a device according to the present invention may be selected for obtaining the properties requested in a device according to the invention. The inductance L is shown versus the capacitance C and the line A corresponds to a maximum resonance frequency of 4.5 kHz. Accordingly, lower frequencies are found by combinations of the capacitance and the inductance above this line A. Furthermore, the amplitude of said oscillating current is given by the relationship of the capacitance to the inductance, which according to the present invention should be at least 1. The straight line B corresponds to such a relationship of 1. This means that the two demands on amplitude and frequency of the oscillating current result in a possible area G shown by dashing in Fig 14 for combinations of the capacitance and the inductance.

The invention is of course not in any way restricted to the embodiments described above, but many possibilities to modifications thereof should be apparent to a person with ordinary skill in the art without departing from the scope of the invention as defined in the appended claims.

The delay of the closing of the switch in the embodiment according to Fig 7 may be any deemed to be suitable, such as for example 5 ms or 10 ms.

**Claims**

1. A device configured to break DC currents exceeding 2500 A flowing in a first current path and to transfer said DC currents to an alternative second current path, said device comprising:

   • at least one interrupter (1) to be arranged in said first current path and having contacts (9, 10) movable with respect to each other from a closing to an opening position of the interrupter for breaking a current flowing therethrough,
   • a resonance circuit (2) connected in parallel with said interrupter and comprising a capacitor (3) and an inductance (4) connected in series and configured to create an oscillating current superimposed on said DC current for creating a zero-crossing of the current flowing through the interrupter, thereby enabling breaking of this current when said contacts are moved apart, and
   • a surge arrester (7) connected in parallel with said resonance circuit (2) and configured to start to conduct when the voltage across said interrupter (1) has reached a certain value upon movement of said contacts apart and to conduct until said DC current has been commutated to said alternative second current path connected to said first current path as a consequence of the presence of said voltage across said interrupter in said first current path,

   **characterized in that** the relationship of the capacitance in $\mu$F to the inductance in $\mu$H of said resonance circuit is $\geq 1$.

2. A device according to claim 1, **characterized in that** said relationship is $\geq 2$.

**3.** A device according to claim 1 or 2, <u>**characterized**</u> **in that** said relationship is $\leq 8$ and preferably between 2 and 8.

**4.** A device according to any of the preceding claims, <u>**characterized**</u> **in that** said relationship is between 3 and 6, preferably between 2.5 and 3.5.

**5.** A device according to any of the preceding claims, <u>**characterized**</u> **in that** said inductance (4) of the resonance circuit (2) is formed solely by the self inductance of a conductor (11) used to connect said capacitor in parallel with said interrupter.

**6.** A device according to any of the preceding claims, <u>**characterized**</u> **in that** said inductance (4) of said resonance circuit is between 5 and 35 $\mu$H or between 15 and 25 $\mu$H.

**7.** A device according to any of the preceding claims, <u>**characterized**</u> **in that** capacitance (3) of the resonance circuit is between 40 and 80 $\mu$F or between 50 and 70 $\mu$F.

**8.** A device according to any of the preceding claims, <u>**characterized**</u> **in that** said inductance (4) of the resonance circuit is between 15 and 25 $\mu$H and said relationship is between 2.5 and 3.5.

**9.** A device according to any of the preceding claims, <u>**characterized**</u> **in that** said resonance circuit (2) is purely passive.

**10.** A device according to any of the preceding claims, <u>**characterized**</u> **in that** it has only one said interrupter (1) connected in parallel with said resonance circuit (2).

**11.** A device according to any of claims 1-9, <u>**characterized**</u> **in that** it has two or more said interrupters (1a, 1b) connected in series, and that the series connection of said interrupters is connected in parallel with said resonance circuit (2).

**12.** A device according to any of claims 1-8, 10 and 11, <u>**characterized**</u> **in that** said resonance circuit comprises a switch (6) connected in series with said capacitor (3) and said inductance (4) and configured to be open when said interrupter (1) is in a closed conducting state, and that the device further comprises means (12) configured to control said switch to close and by that to close said resonance circuit with a delay with respect to said opening of said interrupter.

**13.** Use of a device according to any of claims 1-12 for breaking a DC current I, in which 2500 A $\leq$ I $\leq$ 7000 A, preferably for I $\geq$ 4500 A.

**14.** A plant for transmitting electric power through High Voltage Direct Current (HVDC) having in at least one converter station (100, 101) thereof a device (109) according to any of claims 1-12 for commutating a DC current flowing in a first current path (111) of said plant into an alternative second current path (112) thereof.

**15.** A plant according to claim 14, <u>**characterized**</u> **in that** said plant has a bipole direct current line interconnecting two said converter stations (100, 101) thereof, and that said device is arranged in a ground return path (111) used by said DC current upon failure in connection with one of the two poles (107, 108) of the direct current line and to commutate said DC current to flow through a metallic return path (112) between said stations.

**Patentansprüche**

**1.** Vorrichtung, die dafür ausgelegt ist, in einem ersten Strompfad fließende Gleichströme, die 2500 A übersteigen, zu unterbrechen und die besagten Gleichströme in einen alternativen zweiten Strompfad zu überführen, wobei die besagte Vorrichtung Folgendes umfasst:

   • mindestens einen Unterbrecher (1), der in dem besagten ersten Strompfad anzuordnen ist und Kontakte (9, 10) besitzt, welche von einer geschlossenen zu einer geöffneten Position des Unterbrechers zueinander beweglich sind, um einen durch diesen fließenden Strom zu unterbrechen,
   • eine Resonanzschaltung (2), die mit dem besagten Unterbrecher parallel geschaltet ist und einen Kondensator (3) und eine Induktivität (4) umfasst, die in Reihe geschaltet und dafür ausgelegt sind, einen oszillierenden Strom zu erzeugen, der dem besagten Gleichstrom überlagert wird, um einen Nulldurchgang des durch den Unterbrecher fließenden Stroms zu erzeugen und dadurch eine Unterbrechung dieses Stromes zu ermöglichen, wenn die besagten Kontakte auseinander bewegt werden, und

• einen Überspannungsschutz (7), der mit der besagten Resonanzschaltung (2) parallel geschaltet und dafür ausgelegt ist zu leiten, sobald die Spannung über den besagten Unterbrecher (1) einen bestimmten Wert erreicht, wenn die besagten Kontakte auseinander bewegt wurden, und so lange zu leiten, bis der besagte Gleichstrom auf den besagten alternativen zweiten Strompfad kommutiert wurde, der mit dem besagten ersten Strompfad verbunden ist, als Folge des Vorhandenseins der besagten Spannung über den besagten Unterbrecher in dem besagten ersten Strompfad,

**dadurch gekennzeichnet, dass** das Verhältnis der Kapazität in $\mu$F zur Induktivität in $\mu$H der besagten Resonanzschaltung $\geq$1 ist.

2. Vorrichtung nach Anspruch 1, **dadurch gekennzeichnet, dass** das besagte Verhältnis $\geq$2 ist.

3. Vorrichtung nach Anspruch 1 oder 2, **dadurch gekennzeichnet, dass** das besagte Verhältnis $\leq$8 ist und vorzugsweise zwischen 2 und 8 liegt.

4. Vorrichtung nach einem der vorstehenden Ansprüche, **dadurch gekennzeichnet, dass** das Verhältnis zwischen 3 und 6 liegt, vorzugsweise zwischen 2,5 und 3,5.

5. Vorrichtung nach einem der vorstehenden Ansprüche, **dadurch gekennzeichnet, dass** die besagte Induktivität (4) der Resonanzschaltung (2) ausschließlich durch die Selbstinduktivität eines Leiters (11) gebildet wird, welcher dazu dient, den besagten Kondensator mit dem besagten Unterbrecher parallel zu schalten.

6. Vorrichtung nach einem der vorstehenden Ansprüche, **dadurch gekennzeichnet, dass** die besagte Induktivität (4) der besagten Resonanzschaltung zwischen 5 und 35 $\mu$H oder zwischen 15 und 25 $\mu$H liegt.

7. Vorrichtung nach einem der vorstehenden Ansprüche, **dadurch gekennzeichnet, dass** die besagte Kapazität (3) der Resonanzschaltung zwischen 40 und 80 $\mu$F oder zwischen 50 und 70 $\mu$F liegt.

8. Vorrichtung nach einem der vorstehenden Ansprüche, **dadurch gekennzeichnet, dass** die besagte Induktivität (4) der Resonanzschaltung zwischen 15 und 25 $\mu$H und das besagte Verhältnis zwischen 2,5 und 3,5 liegt.

9. Vorrichtung nach einem der vorstehenden Ansprüche, **dadurch gekennzeichnet, dass** die besagte Resonanzschaltung (2) rein passiv ist.

10. Vorrichtung nach einem der vorstehenden Ansprüche, **dadurch gekennzeichnet, dass** sie nur einen einzigen besagten Unterbrecher (1) aufweist, der mit der besagten Resonanzschaltung (2) parallel geschaltet ist.

11. Vorrichtung nach einem der Ansprüche 1-9, **dadurch gekennzeichnet, dass** er zwei oder mehr der besagten Unterbrecher (1a, 1b) in Reihe geschaltet aufweist und dass die Reihenschaltung der besagten Unterbrecher mit der besagten Resonanzschaltung (2) parallel geschaltet ist.

12. Vorrichtung nach einem der Ansprüche 1-8, 10 und 11, **dadurch gekennzeichnet, dass** die besagte Resonanzschaltung einen Schalter (6) umfasst, der mit dem besagten Kondensator (3) und der besagten Induktivität (4) in Reihe geschaltet und dafür ausgelegt ist, offen zu sein, wenn sich der besagte Unterbrecher (1) in einem geschlossenen, leitenden Zustand befindet, und dass die Vorrichtung ferner Mittel (12) umfasst, die dafür ausgelegt sind, den besagten Schalter zum Schließen anzusteuern und dadurch die besagte Resonanzschaltung mit einer Verzögerung bezogen auf das besagte Öffnen des besagten Unterbrechers zu schließen.

13. Verwenden einer Vorrichtung nach einem der Ansprüche 1-12 zum Unterbrechen eines Gleichstromes I, wobei 2500 A $\leq$ I $\leq$ 7000 A, vorzugsweise für I $\geq$ 4500 A.

14. Anlage zum Übertragen elektrischer Energie mittels Hochspannungs-Gleichstrom-Übertragung (HGÜ), welche in mindestens einer Umrichteranlage (100, 101) davon eine Vorrichtung (109) nach einem der Ansprüche 1-12 aufweist, um einen in einem ersten Strompfad (111) der besagten Anlage fließenden Gleichstrom in einen alternativen zweiten Strompfad (112) davon zu kommutieren.

15. Anlage nach Anspruch 14, **dadurch gekennzeichnet, dass** die besagte Anlage eine Bipolar-Gleichstromleitung aufweist, welche zwei der besagten Umrichteranlagen (100, 101) davon verbindet, und dass die besagte Vorrichtung in einem Erdrückleitungspfad (111) angeordnet ist, der von dem besagten Gleichstrom genutzt wird, wenn die Verbindung zu einem der beiden Pole (107, 108) der Gleichstromleitung ausfällt, um den besagten Gleichstrom zu kommutieren, sodass er durch einen metallischen Rückleitpfad (112) zwischen den besagten Anlagen fließt.

## Revendications

1. Dispositif configuré de façon à interrompre des courants continus dépassant 2500 A s'écoulant dans un premier chemin de courant et à transférer lesdits courants continus dans un deuxième chemin de courant possible, ledit dispositif comprenant :

   • au moins un interrupteur (1) devant être disposé dans ledit premier chemin de courant et ayant des contacts (9, 10) capables de bouger l'un par rapport à l'autre d'une position de fermeture à une position d'ouverture de l'interrupteur pour interrompre un courant s'écoulant à travers celui-ci,
   • un circuit résonnant (2) connecté en parallèle avec ledit interrupteur et comportant un condensateur (3) et une bobine d'inductance (4) connectés en série et configuré de façon à créer un courant oscillant superposé sur ledit courant continu afin de créer un passage à zéro du courant s'écoulant à travers l'interrupteur, permettant ainsi l'interruption de ce courant lorsque lesdits contacts sont écartés, et
   • un limiteur de surtension (7) connecté en parallèle avec ledit circuit résonnant (2) et configuré de façon à commencer à conduire lorsque la tension aux bornes dudit interrupteur (1) a atteint une certaine valeur lors de l'écartement desdits contact et à conduire jusqu'à ce que ledit courant continu ait été commuté dans ledit deuxième chemin de courant possible connecté audit premier chemin de courant en conséquence de la présence de ladite tension aux bornes de l'interrupteur dans ledit premier chemin de courant,

   **caractérisé en ce que** le rapport entre la capacité en $\mu$F et l'inductance en $\mu$H dudit circuit résonnant est $\geq$ 1.

2. Dispositif selon la revendication 1, **caractérisé en ce que** ledit rapport est $\geq$ 2.

3. Dispositif selon la revendication 1 ou 2, **caractérisé en ce que** ledit rapport est $\geq$ 8 et de préférence situé entre 2 et 8.

4. Dispositif selon l'une quelconque des revendications précédentes, **caractérisé en ce que** ledit rapport est situé entre 3 et 6, de préférence entre 2,5 et 3,5.

5. Dispositif selon l'une quelconque des revendications précédentes, **caractérisé en ce que** ladite inductance (4) du circuit résonnant (2) est formée uniquement par l'inductance propre d'un conducteur (11) utilisé pour connecter ledit condensateur en parallèle avec ledit interrupteur.

6. Dispositif selon l'une quelconque des revendications précédentes, **caractérisé en ce que** ladite inductance (4) dudit circuit résonnant est située entre 5 et 35 $\mu$H ou entre 15 et 25 $\mu$H.

7. Dispositif selon l'une quelconque des revendications précédentes, **caractérisé en ce que** la capacité (3) dudit circuit résonnant est située entre 40 et 80 $\mu$F ou entre 50 et 70 $\mu$F.

8. Dispositif selon l'une quelconque des revendications précédentes, **caractérisé en ce que** ladite inductance (4) dudit circuit résonnant est située entre 15 et 25 $\mu$H et ledit rapport est situé entre 2,5 et 3,5.

9. Dispositif selon l'une quelconque des revendications précédentes, **caractérisé en ce que** ledit circuit résonnant (2) est purement passif.

10. Dispositif selon l'une quelconque des revendications précédentes, **caractérisé en ce qu'**il a seulement un dit interrupteur (1) connecté en parallèle avec ledit circuit résonnant (2).

11. Dispositif selon l'une quelconque des revendications 1 à 9, **caractérisé en ce qu'**il a un ou plusieurs dits interrupteurs (1a, 1b) connectés en série, et **en ce que** la connexion en série desdits interrupteurs est connectée en parallèle avec ledit circuit résonnant (2).

12. Dispositif selon l'une quelconque des revendications 1 à 8 et 11, **caractérisé en ce que** ledit circuit résonnant comporte un commutateur (6) connecté en série avec ledit condensateur (3) et ladite bobine d'inductance (4) et configuré de façon à être ouvert lorsque ledit interrupteur (1) est dans un état conducteur fermé, et **en ce que** le dispositif comporte en outre un moyen (12) configuré de façon à commander la fermeture dudit commutateur et, ce faisant, la fermeture dudit circuit résonnant avec une temporisation par rapport à ladite ouverture dudit interrupteur.

13. Utilisation d'un dispositif selon l'une quelconque des revendications 1 à 12 pour interrompre un courant continu I, dans laquelle 2500 A ≤ I ≤ 7000 A, de préférence pour I ≥ 4500 A.

14. Installation pour transmettre de l'énergie électrique par l'intermédiaire d'un courant continu à haute tension (CCHT) ayant, dans au moins une station de conversion (100, 101) de celle-ci, un dispositif (109) selon l'une quelconque des revendications 1 à 12 pour commuter un courant continu s'écoulant dans un premier chemin de courant (111) de ladite installation dans un deuxième chemin de courant possible (112) de celle-ci.

15. Installation selon la revendication 14, **caractérisée en ce que** ladite installation a une ligne de courant continu bipolaire interconnectant deux dites stations de conversion (100, 101) de celle-ci, et **en ce que** ledit dispositif est disposé dans un chemin de retour par la terre (111) utilisé par ledit courant continu lors de la défaillance dans la connexion avec un des deux pôles (107, 108) de ladite ligne de courant continu et de façon à commuter ledit courant continu pour qu'il s'écoule à travers un chemin de retour métallique (112) entre lesdites stations.

_Fig 1_

_Fig 2_

$$\underline{\mathrm{Fig\ 3}}$$

Prior art

$$\underline{\mathrm{Fig\ 4}}$$

Fig 5

Fig 6

Fig 7

Fig 8

Fig 9

Fig 10

Fig 11

$Fig$ 12

$Fig$ 13

$Fig$ 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0740320 A2

**Non-patent literature cited in the description**

- **A. LEE et al.** The development of a HVDC SF6 breaker. *IEEE Trans. on Power Apparatus and Systems,* October 1985, vol. PAS-104 (10), 2721-2729